(19) Europäisches Patentamt
European Patent Office
Office européen des brevets

(11) **EP 2 184 472 B1**

(12) **EUROPEAN PATENT SPECIFICATION**

(45) Date of publication and mention
of the grant of the patent:
**20.06.2012  Bulletin 2012/25**

(51) Int Cl.:
**F02D 41/24** (2006.01)

(21) Application number: **08168714.7**

(22) Date of filing: **10.11.2008**

(54) **Engine Control System and Method**

Motorsteuerungssystem und Verfahren

Système et procédé de commande de moteur

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(43) Date of publication of application:
**12.05.2010   Bulletin 2010/19**

(73) Proprietor: **Delphi Technologies Holding S.à.r.l.**
**4940 Bascharage (LU)**

(72) Inventors:
• **Guerrassi, Noureddine**
**41350 Vineuil (FR)**

• **Allezy, Pierre**
**41370 Talcy (FR)**

(74) Representative: **Gregory, John David Charles**
**Delphi Diesel Systems**
**Patent Department**
**Courteney Road**
**Gillingham**
**Kent ME8 0RU (GB)**

(56) References cited:
**EP-A1- 1 593 829      WO-A-2004/048761**
**DE-A1-102004 008 234    US-A1- 2006 230 821**

**Description**

Technical Field of the Invention

The present invention relates to an engine control system and method. In particular, the present invention relates to the field of electronic systems and methods for the control of fuel injection quantity and injection timing.

Background to the invention

Engine development has seen improvements in many areas such as the reduction of engine emissions, reduction in fuel consumption and noise and increases in power density. Such improvements stem from improvements in engine design, fuel injection equipment, air management systems and aftertreatment.

Advances in electronic control of engine systems have also been responsible in part for some of the above improvements and over the last ten years control strategies have been developed that allow precise control of engine torque and which allow for changes in the engine system due to mechanical wear to be compensated. Electronic control may also control instability due to high pressure hydraulic oscillations generated by multiple injector activation.

The requirements of future emission regulations has resulted in several investigations into new combustion concepts called homogeneous charge compression ignition (HCCI), low temperature combustion (LTC) or partially mixed compression ignition (PCCI). The objective of all these new approaches is to achieve early mixing of air and fuel in a very dilute charge before combustion initiation in order to reduce NOx & Particulate emissions.

These new approaches of low temperature combustions (HCCI coupled with higher cooled Exhaust Gas Recirculation) place new demands on the functionality required of injection electronic control systems. In particular, the precision required with respect to multiple injection timings and also fuel quantity control is increased under these new approaches.

As an example, it is noted that transient engine behaviour becomes very sensitive to multiple injection timings and quantities, and existing electronic control approaches lead to engine misfires.

Another factor that is driving the evolution of new engine control approaches is the use of new fuel types, e.g. bio-fuels and other new fuel types. The different fuel characteristics of such new fuels modify the manner in which combustion takes place and can lead to a deterioration in emission and combustion noise.

Examples of typical engine control system development over the last ten years to address the above issues include US2003046989 which describes a method for determining combustion quality of an engine based on real time in-cylinder pressure measurement and a function map that links the in-cylinder pressure to manifold absolute pressure. EP1744037 describes a method for use in an HCCI internal combustion engine in which the start of combustion is adjusted by means of a feed forward control loop.

FR2864840A1 describes a general control approach which describes the use of a simple controller in conjunction with feed-forward calibrated maps to adjust quantities and timings of multiple injections within an engine. A limitation of the described control approach is the identification of a start of injection in a transient combustion situation, as the predetermined feed-forward maps are obtained only for steady state use from an engine bench test.

WO2004/048761 describes an in-cylinder pressure sensor that obtains a high resolution pressure curve for each cylinder cycle thereby allowing various data to be derived for improved monitoring and control of operation of the engine.

DE 102004008234 relates to a cyclic closed loop injection system.

The above cited systems and methods either operate to control just a single part of the overall engine control or are limited in that they are unable to correct for changes in the engine system over time. Furthermore, use of the above types of engine control in developing combustion concepts, such as HCCI, is of limited benefit since they are generally unable to cope with the rapid transient changes in engine performance that such combustion concepts produce.

It is therefore an object of the present invention to provide a control approach that substantially overcomes or mitigates the above described problems.

Summary of the Invention

According to a first aspect of the present invention there is provided a method of controlling an engine system, the method comprising: receiving data relating to engine operation; calculating in an engine model a combustion parameter and an injection parameter required to operate the engine system in accordance with the received engine data; controlling the engine system based on the calculated injection parameter; and adjusting the engine model over time based on a comparison between the calculated engine combustion parameter and a corresponding measured engine combustion parameter, wherein the engine model comprises a fuel efficiency model which is used to calculate a global fuel value for the engine system and a main timing model which is used to calculate a timing value which can be used to determine absolute injection timings for the injectors.

The present invention provides a method of engine control that is capable of use with new combustion concepts under development as well as providing performance benefits to existing combustion concepts. The method of the present invention is also able to adjust for changes in an engine system over time. In contrast to prior engine control systems the method of the present invention does not utilize either feed forward maps to predict engine control parameters or the direct adjustment of engine control parameters via a closed control loop. Instead the present invention proposes the use of an adaptive engine model based approach which is capable of predicting rapidly and precisely the required engine parameters in transient situations. As the engine model is adaptive, via the adjustment of coefficients within the model in response to measured engine parameters, the impact of engine component wear and drift is minimized. Adaptive engine model coefficients also improve the predictive capabilities of the engine model leading to a fast engine control and reduced misfiring cycles.

The present invention describes an innovative complete engine control approach which uses direct combustion parameter control based on in-cylinder gas pressure measurement. This control approach is a general control technique and could be applied to all types of direct injection diesel engines with one or several cylinders and with any type of combustion (higher cooled EGR conventional combustion concepts, HCCI, PCCI, LTC...). It is noted that the present invention is a continuation and development of the systems and methods described in EP1731745; EP1548418, EP1496237; EP1512861; EP1559895; EP1731740 and EP1936156 which all describe the general use of cylinder pressure for fuel injection quantity correction.

In the present invention data relating to engine operation is received at an engine model. The received data may comprise driver input data (e.g. from the position of the accelerator pedal), data relating to the engine speed and load and also data relating to the particular combustion mode the engine system is operating in. Having received the engine operation data the engine model calculates injection parameters required to operate the engine in accordance with the received data. These injection parameters may include multiple injection timings, fuel quantities etc depending on the engine system in question. The model also calculates a combustion parameter (for example the crank angle position at 50% of cumulative heat release rate, the indicated mean effective pressure or other suitable combustion parameter) that can be used to track the performance of the engine system. The method therefore also comprises adjusting the engine model over time based on a comparison between the calculated engine combustion parameter and a corresponding measured combustion parameter.

By measuring actual engine system parameters it is possible to correct the model over time to ensure rapid, efficient and precise engine operation at all times.

The engine model of the present invention may output injection timing information and also fuel quantity information. The fuel quantity required by the engine system may be determined by a driver input, a driver demand parameter, such as the position of the accelerator pedal within the vehicle.

The data received in the receiving step may include data on the engine state and the model may calculate a combustion control parameter, such as crank angle position at 50% of cumulative heat release rate, from this data.

Conveniently, the method further comprises measuring in-cylinder pressures and determining a measured combustion parameter from the pressure data in order to compare with the model calculated combustion parameter. Preferably, the in-cylinder pressure is measured for at least one cylinder within the engine system.

It is noted that the present invention may be applied to single cylinder engine systems or multiple engine systems. In the event that the invention is applied to a multiple engine system the in-cylinder pressure may be determined for each cylinder by means of a pressure sensor on each cylinder or alternatively there may be fewer pressure sensors than cylinders.

The engine model may be adjusted as often as required. For example, engine adjustment may take place each engine cycle or alternatively may happen periodically but less frequently than every engine cycle.

The engine model may conveniently comprise model coefficients that are used to calculate the injection and combustion parameters for the engine at any given time and it is these model coefficients that are adjusted in the adjustment step. Updated coefficients may therefore be calculated based on the comparison of the calculated and measured combustion parameters and these coefficients may be stored within the engine model.

Conveniently, the calculated engine combustion parameter may comprise the centre of combustion and the injection parameter may comprise injection timing.

Conveniently, the calculated engine combustion parameter may comprise engine torque and the injection parameter may comprise fuel demand.

The method of the present invention may be used to calculate a global fuel value for the engine system. This global value may then be used to determine the actual fuel value per cylinder.

In a preferred embodiment the global fuel value may be combined with a fuel balancing step in which the fuel value delivered to each cylinder is adjusted to maximise engine performance within the constraint that the various fuel corrections across all cylinders sum to zero such that the total fuel being delivered by all cylinders equals the global fuel value determined by the model.

Conveniently the engine model may comprise a fuel efficiency model which is used to calculate a global fuel value for the engine system and a main timing model (combustion centre position model) which is used to calculate a timing value which can be used to determine absolute injection timings for the injectors.

Conveniently, the method comprises a pre-calculation step in which in-cylinder pressure measurements are used to calculate a plurality of combustion parameters which are subsequently used in the calculating step by the engine model.

According to a second aspect of the present invention there is provided a controller arranged to control an engine system comprising: inputs arranged to receive data relating to engine operation; processing means arranged to calculate in an engine model a combustion parameter and an injection parameter required to operate the engine system in accordance with the received engine data; outputs arranged to output control signals for controlling the engine system based on the calculated injection parameter; and adjustment means arranged to adjust the engine model over time based on a comparison between the calculated engine combustion parameter and a corresponding measured engine combustion parameter, wherein the engine model comprises a fuel efficiency model which is used to calculate a global fuel value for the engine system and a main timing model which is used to calculate a timing value which can be used to determine absolute injection timings for the injectors.

The invention also extends to a computer readable medium comprising a computer program arranged to configure a computer or an electronic control unit to implement the method according to the first aspect of the invention.

Brief Description of the Drawings

In order that the invention may be more readily understood, reference will now be made by way of example to the accompanying drawings in which:

Figure 1 is a representation of an engine system and electronic control unit (ECU) incorporating a control module in accordance with an embodiment of the present invention;

Figure 2 is a functional representation of a control method in accordance with an embodiment of the present invention;

Figure 3 shows the application of the control method in accordance with an embodiment of the present invention to engine torque control (Indicated Mean Effective Pressure: IMEP);

Figures 4a and 4b show the application of the control method in accordance with an embodiment of the present invention to injection timing control (i.e. injection timing control from demanded combustion centre control);

Figure 5 shows a cylinder pressure versus crank angle trace to illustrate an acquisition method that may be used in conjunction with the present invention;

Figures 6 to 11 show the performance benefits that may be achieved with the control method of the present invention in comparison to an engine system operating with a known control system.

Detailed Description of Preferred Embodiments

In the following description and associated drawings like numerals are used to denote like features.

The following terms may also be referenced in the following description and associated drawings: IMEP - Indicated Mean Effective Pressure, used in this development for engine torque control (Bar) (Indicated engine torque = IMEP x Engine swept volume (constant)); SOC - Crank angle position at Start Of Combustion (Degree Crank Angle); CA50% - Crank angle position at 50% of cumulative heat release rate (here referred to as the Centre of Combustion Position) (Degree Crank Angle); SOI - Start of Injection (Degree Crank Angle); Prail - Rail pressure (Bar); $\eta$ - Combustion efficiency - Main injection timing (Degree Crank Angle); V - Cylinder volume (variable) ($cm^3$); k - Compression Polytropic coefficient; Q - Fuel mass or generated combustion heat; TDC - Top Dead Centre (Reference 0 Crank angle); ECU Electronic Control unit.

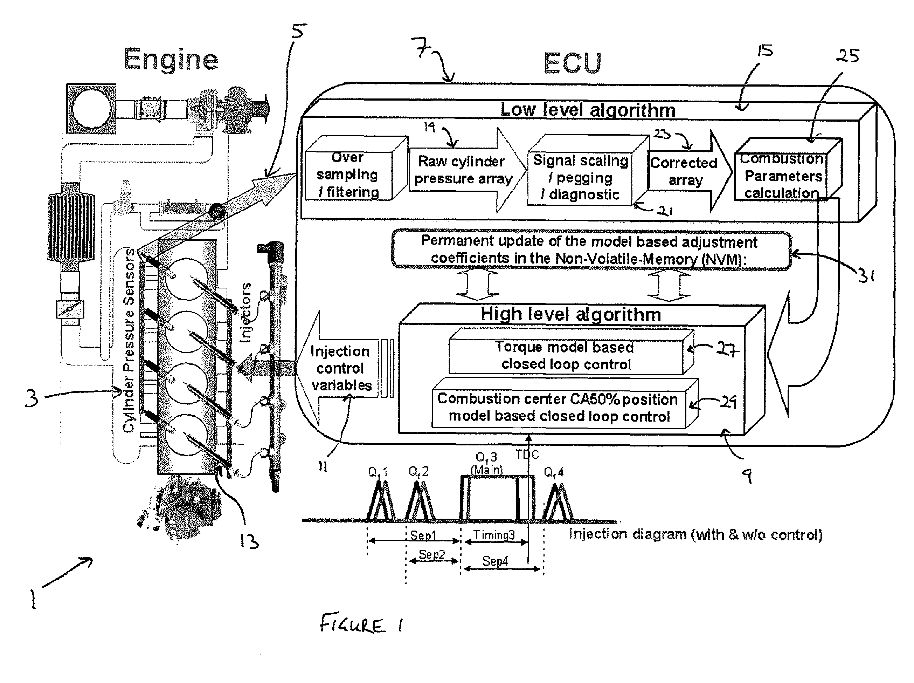

Figure 1 shows a representation of an engine system 1 in which in-cylinder pressure measurements from cylinder pressure sensors 3 are fed (arrow 5) into the vehicle's engine control unit 7. The control method in accordance with the present invention is generally represented by the "high level" algorithm box 9, the output of which are injection control variables 11 which are sent to the engine's injectors 13.

Prior to the sensor output 5 being used by the high level algorithm 9, a "low level" algorithm 15 cleans up the sensor data and calculates a number of combustion parameters which are then used by the high level algorithm 9.

In order to reduce the calculation load on the ECU and to enable the engine model 9 to calculate injection control variables sufficiently quickly at all engine speeds the in-cylinder pressure measurements may conveniently be over-sampled.

Within the low level algorithm 15 therefore the oversampled output of the sensors 3 is filtered by a filtering module 17 to produce a raw cylinder pressure array 19. The raw array 19 may then be passed to a scaling and diagnostic module 21 which performs pressure measurement pegging and other scaling functions in order to output a corrected pressure array 23. It is noted that the applicant's patent application EP1936157 describes a pressure pegging method that may be utilised here.

The corrected pressure array 23 is then sent to a combustion parameters calculation module 25 which calculates a number of combustion parameters as described below which may then be used by the control method of an embodiment of the present invention.

Parameters calculated in the module 25 may comprise: the indicated mean effective pressure (IMEP) in bar (it is noted that the indicated engine torque = IMEP engine x swept volume (a constant)); CA50%, the cumulative heat release rate (HRR); peak pressure and location of peak pressure; the pressure derivative with respect to crank angle, $DP/D\alpha$, for combustion noise calculations (in particular the max $DP/D\alpha$ and location of this maximum may be calculated).

The control method in accordance with the present invention is, as noted above, generally represented by the "high level" algorithm box 9. The control method of the present invention provides a mechanism for determining fuel quantities via a torque model 27 and for determining injection timings via a combustion centre position model 29. Both models predict injection parameters with reference to one or more mathematical functions (as described below). In order to maintain the accuracy of the various engine models 27, 29 the model coefficients are adjusted with reference to actual measured engine parameters. The adjusted model coefficients are permanently stored within the non-volatile memory of the ECU 31.

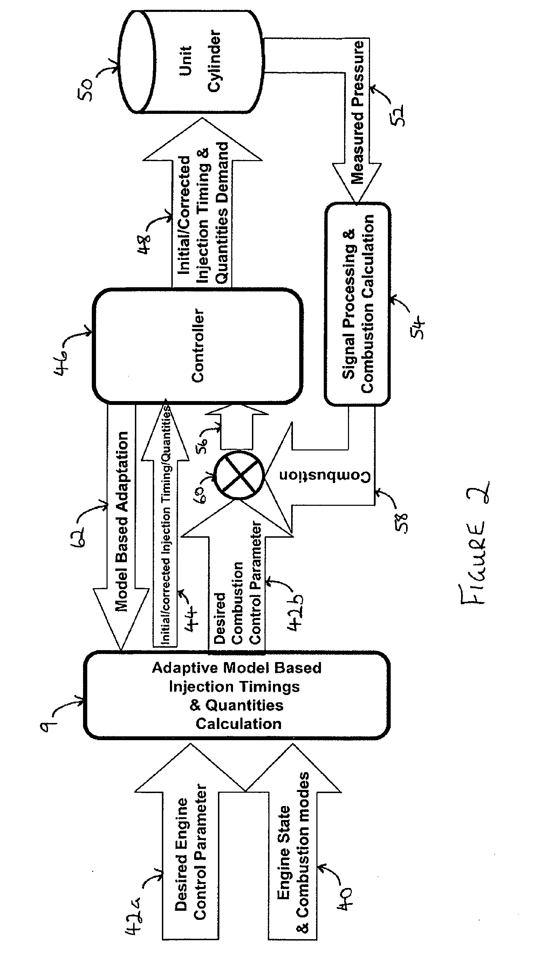

Figure 2 shows a functional representation of a control method in accordance with an embodiment of the present invention.

The control method of the present invention converts a driver desired engine control parameter 42a (such as an input via a vehicle's accelerator pedal) into a desired combustion parameter 42b (e.g. pedal position is converted into a torque/IMEP parameter) and also into injection parameters such as fuel quantity or injection timing. As noted above, with reference to Figure 1, the present invention uses an adaptive engine control model 9 to perform the injection parameter calculations (Note: control model feature 9 in Figure 2 corresponds to the high level algorithm box 9 of Figure 1).

In operation, the control model 9 receives the desired driver control parameter data 42a (e.g. torque demand via the accelerator pedal) and, depending on the engine state 40 (engine speed & load, cold condition, hot condition...), calculates the corresponding combustion parameter 42b (IMEP for example) and then the corresponding initial injection control parameters 44, such as multiple injection timings and quantities 48. It is noted that the control model 9 may not calculate the exact combustion parameter/injection parameters corresponding to the desired control parameter in certain circumstances, e.g. because the engine is undergoing regeneration and cannot deliver the desired values.

For example, when calculating torque injection parameters (i.e. a fuel quantity calculation), the control model 9 will receive an engine control parameter 42a in the form of torque driver demand via the accelerator pedal. The torque will be translated within the model 9 into an IMEP value and the corresponding injection parameters.

However, in the event that an injection timing (from a demanded combustion centre timing) is being calculated there is no corresponding driver input and therefore no equivalent parameter 42a is input into the model. In the injection timing example however the engine model 9 will itself additionally perform a calculation that will effectively yield the "desired engine control parameter 42a". In this case, data relating to the engine speed and load (the engine state) & combustion mode 40 may be used with a look up map to determine the injection crank angle that yields a given cumulative heat release rate (CA50%). This injection crank angle is a "desired" engine combustion parameter 42b and can be used by the model to determine injection timings.

Returning to Figure 2, once the model 9 has received data 40 and either received or calculated parameter 42a, it calculates and then outputs 44 an initial injection parameter (e.g. a total fuel quantity or injection timing) to a controller 46 (e.g. a PID controller).

The controller 46 then determines how to apply the received injection parameter to the engine system. As shown in Figure 2 the injection parameter is then applied (via arrow 48) to the engine system, represented in the figure by a cylinder 50.

In order to maintain the accuracy of the model 9 and to account for changes in the engine system over time a feedback mechanism that acts on the model coefficients within the adaptive model 9 is in place.

As shown in Figure 2, pressure measurements (taken for example by the sensors 3) are transmitted back (52) to the ECU 7 where they are processed and a combustion parameter corresponding to the modelled injection parameter is calculated (54). This step corresponds to the low level algorithm operations shown in box 15 of Figure 1.

The error 56 between the measured combustion parameter 58 and the desired engine control parameter 42b is then determined at feature 60 and this error value is fed back to the controller 46.

The error value 56 is then used by the controller 46 to adjust the model coefficients (arrow 62). It is noted that the adjusted model coefficients are stored in the non-volatile memory of the ECU 7. For example, in the event that the combustion event being measured is IMEP then the controller 46 will check if the real measured IMEP 58 (derived from the pressure reading 52) is close to the desired IMEP 42b, and correct the model coefficients accordingly.

Once the model coefficients have been updated the engine model 9 will output corrected (as opposed to initial) injection timing/quantity values 44 to the controller 46 which will in turn output corrected data to the engine system 1.

It is noted that the control method depicted in the flow diagram of Figure 2 differs from known closed loop control mechanisms in that the measured parameter (in this case pressure) is not used to *directly* adjust the injection parameter being sent to the engine system. By contrast, the measured parameter is used to adjust the engine model 9 that can then subsequently output corrected injection parameters.

It is also noted that although Figure 2 shows a permanent link from the cylinder 50 to the signal processing module 54 such that the model coefficients are continuously updated, it may be that the feedback and coefficient update may happen less frequently. For example, instead of being updated every engine cycle the coefficients may be updated at a slower rate.

By way of further explanation of the various calculations being performed within the ECU 7 the discussion below explains the calculations performed by both the module 25 and by the engine model 9.

As noted above, the module 25 is used to calculate a number of combustion parameters for use by the model 9. The combustion parameters being calculated may include the indicated mean effective pressure within the cylinders of the engine (IMEP), the cumulative heat release rate (HRR) and the position of 50% of the cumulative heat release rate (CA50%).

IMEP may be calculated by module 25 using the formula:

$$IMEP = \frac{1}{V_{total}} \int PdV$$

where V equals the cylinder volume.

The heat release rate may be calculated by the formula (which can be deduced from the first principle of thermodynamics):

$$\frac{dQ}{d\theta} = \frac{k}{(k-1)} \left( kP\frac{dV}{d\theta} + V\frac{dP}{d\theta} \right)$$

where V = cylinder volume, P = cylinder pressure, θ = crank angle and k = Polytropic coefficient.

The position of 50% cumulative heat release may be calculated by the formula:

$$\frac{dQ}{d\theta} = c_1 P + c_2 \frac{dP}{d\theta}$$

where

$$c_1 = \frac{k}{(k-1)} \frac{dV}{d\theta} \qquad c_2 = \frac{V}{(k-1)}$$

The polytropic coefficient is a constant depending on the engine design..

It is noted that the above computations may be optimised by pre-computing array values for $c_1$ and $c_2$. It is further noted with respect to $c_1$ that if measurements are taken at fixed dθ then the term dV/dθ will be unchanging, thereby allowing a predetermined array to be calculated.

The engine model 9 comprises a combustion efficiency model which can be used to calculate a global fuel value. The model 9 also comprises a main injection timing model which outputs a timing value which can be used to calculate absolute injection timings for the injectors.

The combustion efficiency model may be represented by the formula below:

$$\eta_{combustion} = \eta c_1 f_1(CA50\%) + \eta c_2 f_2(A/F_{ratio}) + \eta c_3 f_3(Prail) + ... + \eta c_n f_n(X_n)$$

where $\eta$ is the combustion efficiency, $A/F_{ratio}$ is the total cylinder air and fuel ratio, and $P_{rail}$ is the pressure in the common rail.

It can be seen that the combustion efficiency is represented above by a plurality of different terms. It is however noted that the combustion efficiency may be calculated on the basis of one or more of these terms.

Combustion efficiency is linked to the total fuel value for the engine by virtue of the formula below:

$$Q_{total\,fuel} = c_0 \frac{IMEP}{\eta_{Combustion}}$$

where Q is fuel quantity and $c_0$ is a constant depending on engine design and fuel type and IMEP is calculated by the module 25 from the pressure readings received from sensors 3.

Main injection timing may be represented by the formula:

$$\tau_{Main} = \tau c_1 f_1(CA50\%) + \tau c_2 f_2(A/F_{ratio}) + \tau c_3 f_3(Prail) + ... + \tau c_n f_n(X_n)$$

where $\tau$ is the main injection timing.

Both the combustion efficiency and main injection timing formulae above comprise adaptive model coefficients which may be calculated via a speed and torque map as noted below:

$$\eta c_n = map(Speed, Torque)$$

$$\tau c_n = map(Speed, Torque)$$

It is these coefficients that are permanently adjusted by virtue of the error value 56 that is fed back to the model 9 and changes to the coefficients are stored in the non-volatile memory of the ECU.

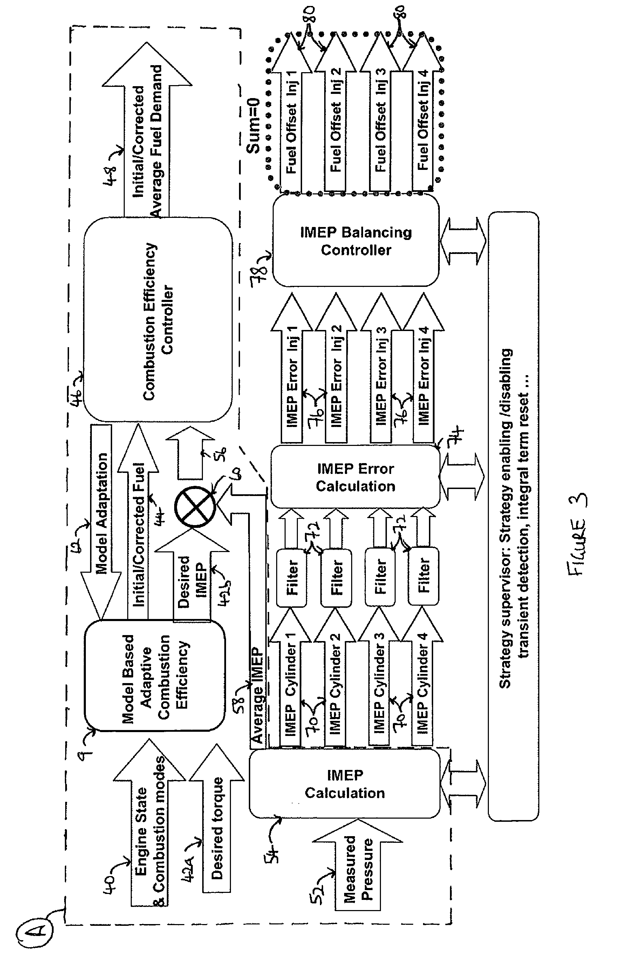

Figure 3 shows the application of the control method in accordance with an embodiment of the present invention to engine torque control.

In Figure 3 the area within the dotted line (Box A) corresponds to the control method expressed in Figure 2 and like numerals have been used to denote like features. It is noted however that the controller 46 is now labelled as a combustion efficiency controller whose output 48 is an average global fuel demand for all the cylinders within the engine system.

In Figure 3 it is noted that the signal processing performed in module 54 also includes a calculation of the IMEP for each cylinder 70 within the engine system. These IMEP values are filtered at 72 before being sent to an IMEP error calculator module 74 which in turn calculates the IMEP error 76 for each cylinder.

The IMEP error calculations are received by an IMEP balancing controller module 78 (such as is described in the Applicant's European patent application EP1429009 which controls and determines the actual fuel amount required by each cylinder.

In a further feature of the present invention the IMEP balancing module 78 may calculate fuel offsets 80 for each injector such that the sum of the offsets is zero thereby ensuring the total fuel value equals the amount calculated by the combustion efficiency controller 46.

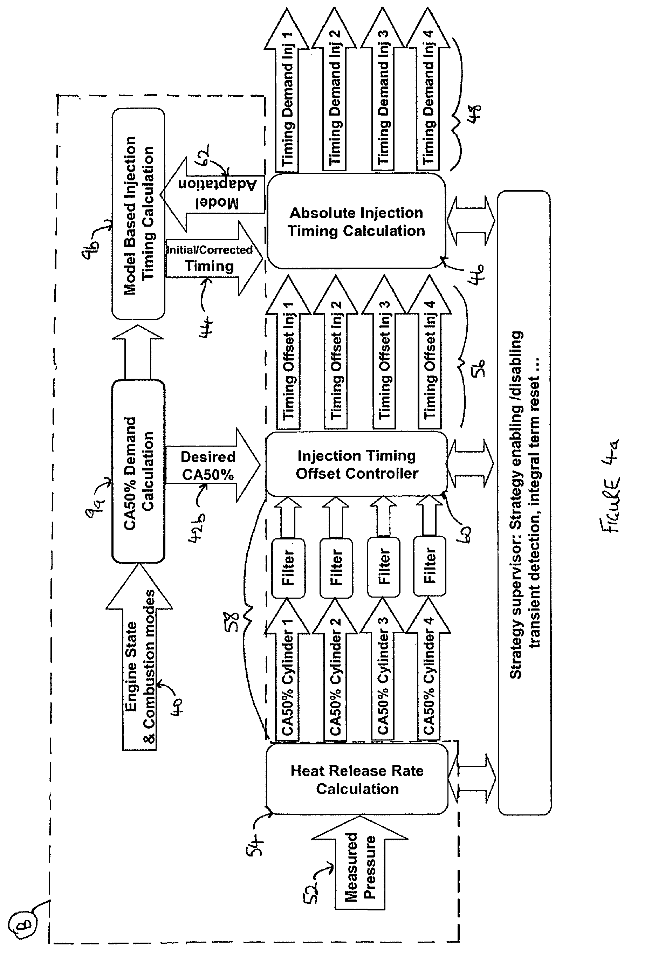

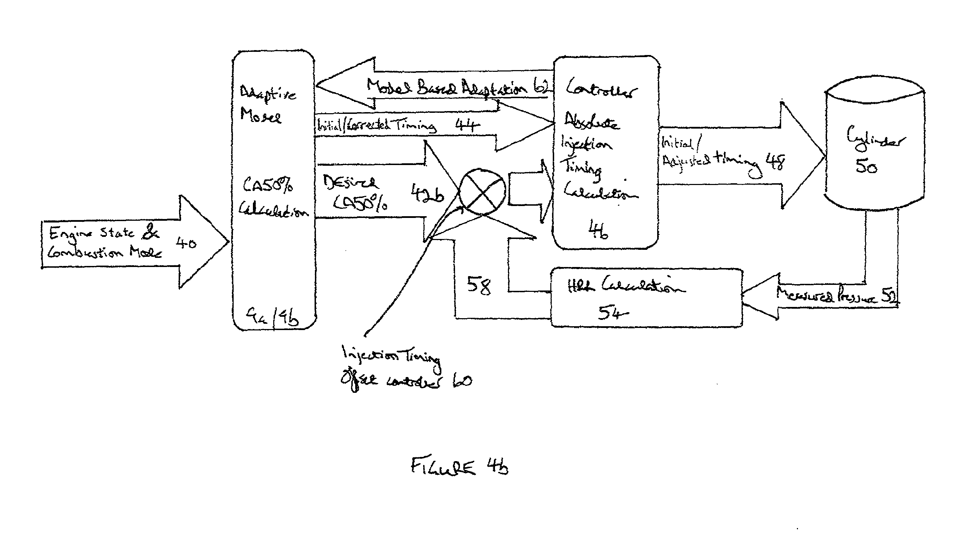

Figure 4a shows the application of the control method in accordance with an embodiment of the present invention to injection timing control (as derived from a combustion centre crank angle position). In Figure 4 the area within the dotted line (Box B) corresponds to the control method expressed in Figure 2 and like numerals have been used to denote like features. For added ease of reference, Figure 4b shows the contents of Box B from Figure 4a represented in the layout of Figure 2.

In Figure 4a it is noted that the controller 46 is now labelled as an absolute injection timing calculation controller whose output 48 is the injection timing for the various injectors within the engine system.

In Figure 4a it is noted that the engine model 9 is broken into two sub-models 9a, 9b. In model 9a the desired engine control parameter, in this case the desired injection angle (CA50%), is calculated with reference to an engine speed/load look up table. In model 9b the desired engine control parameter is used to predict initial injection timings which are then sent to the controller 6.

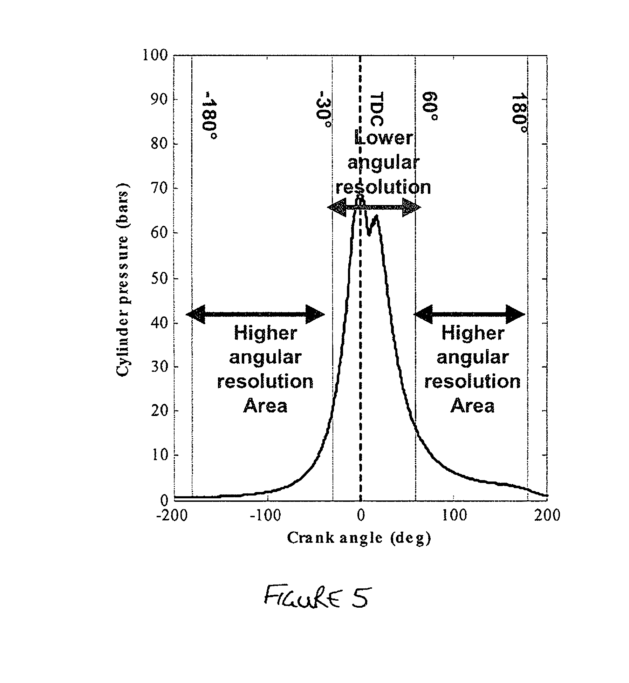

Figure 5 shows a typical graph showing the variation in cylinder pressure with crank angle. In order to calculate the required combustion parameters it is noted that the in-cylinder pressure is sampled between -180° and +180° around top dead centre. In order to reduce the processing burden on the ECU a higher angular resolution sampling regime may be employed between -180° and -30° and from 60° to 180° of crank angle. In the range -30° to 60° the pressure may be sampled more often.

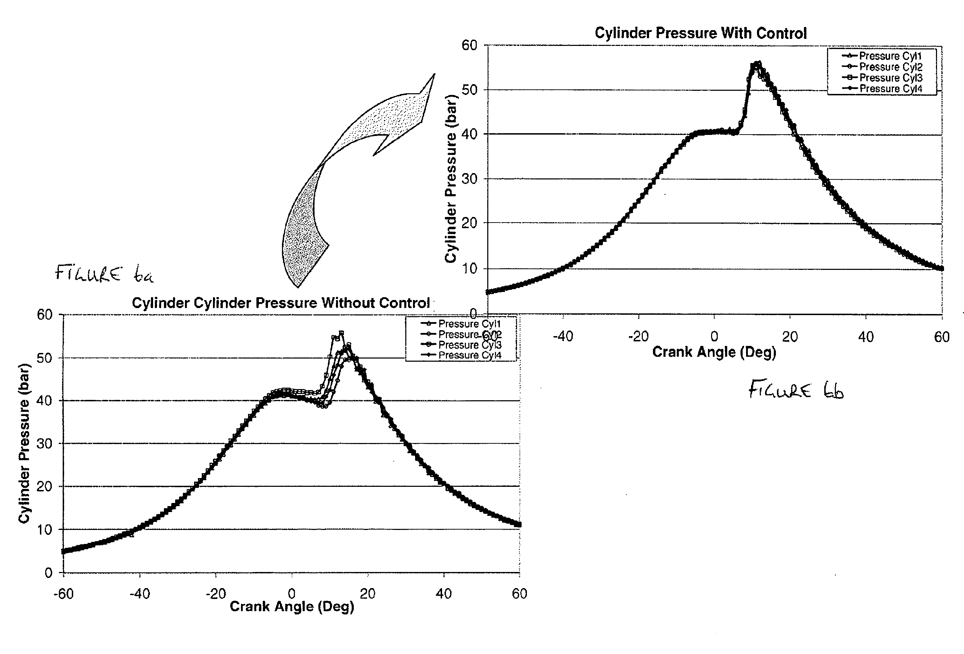

Figures 6 to 11 show various results from an engine system incoroparting a control method and apparaptus in accordance with an embodiment of the present invention.

Figure 6a shows a trace of cylinder pressure versus crank angle for the four cylinders within an engine system that does not have the method/system of the present invention.

As can be seen from the pressure traces there is a noticeable spread between cylinders in both the location of the pressure profile with crank angle and also the magnitude of the pressures recorded.

Figure 6b by contrast shows the same system that is operating in accordance with the control method of the present invention. It can now be seen that there is very good agreement between the pressure traces in all four cylinders.

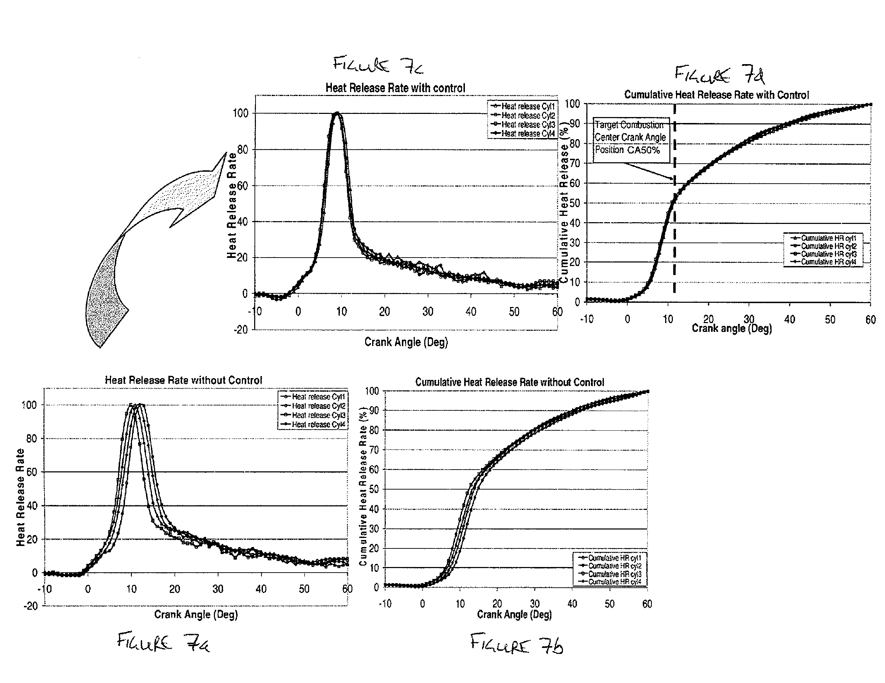

Figures 7a to 7d relate to heat release and cumulative heat release for an engine system with/without the control method of the present invention.

Figures 7a and 7b relate to an engine system that is operating without the control method of the present invention. It can be seen that in Figure 7a the heat release rates for each cylinder are spread with respect to crank angle. Figure 7b which shows the cumulative heat release for the four cylinders also shows a spread in the values with both crank angle and percentage of maximum heat release rate.

In Figures 7c and 7d the results from the same engine system operating with the control method of the present invention are shown. It can now be seen that there is a very close agreement in both Figure 7c (heat release rate per cylinder) and Figure 7d (cumulative heat release rate per cylinder). It is also noted that the target combustion centre position (CA50%) for each cylinder is at the same crank angle.

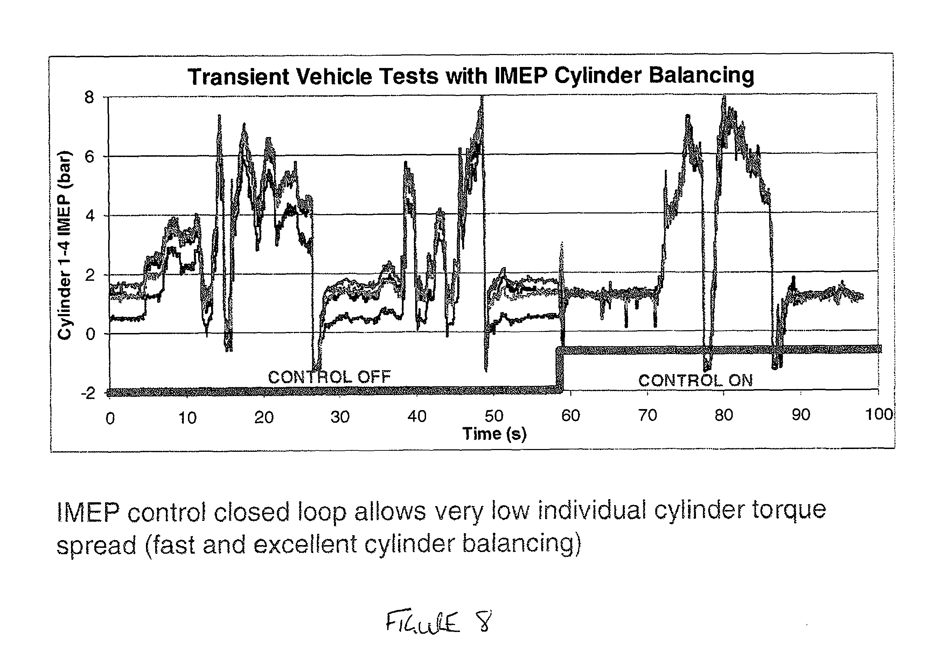

Figure 8 shows an example of transient vehicle torque (IMEP) over time for a system with and without the control method of the presnt invention. It is noted that the vehicle under test is following a European emission regulation driving cycle and is also operating a cylinder balancing method.

It can be seen that prior to the control method being switched on there is a spread in the transient IMEP values over time between the four cylinders of the engine. However, as soon as the control method is switched on the transient IMEP values for the cylinders match up very closely and there is very low individual cylinder torque spread.

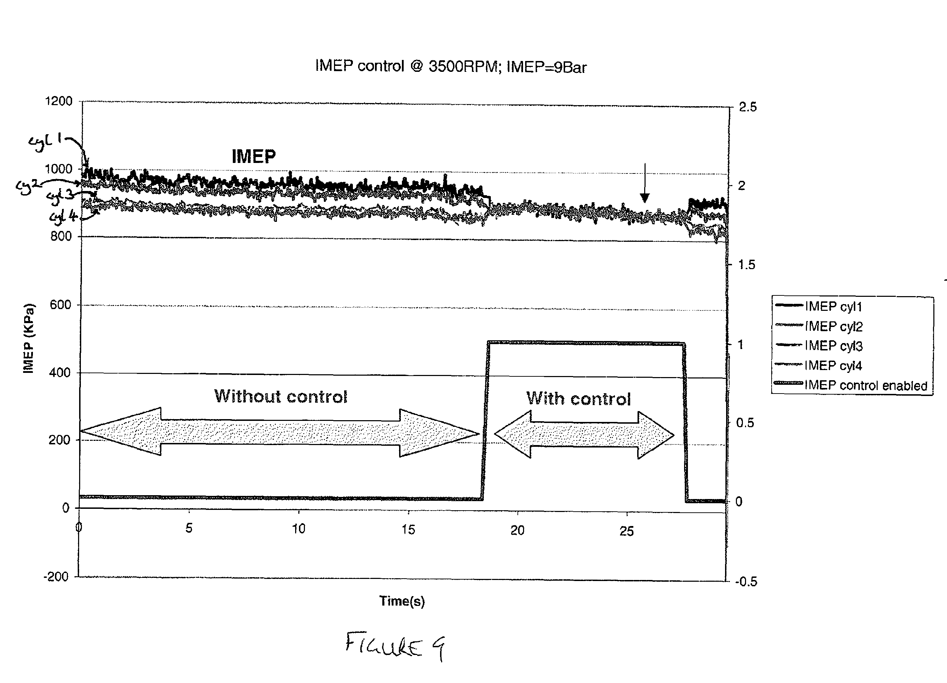

Figure 9 shows high speed vehicle torque over time for a system with and without the control method of the present invention. It is noted that the engine in this test was operating at 3500RPM with a mean indicated effective pressure (IMEP) of 9Bar. The on/off status of the control method is shown by the logic trace at the bottom of the graph. It can be seen that as soon the control method is enabled then the spread in IMEP between the various cylinders is strongly reduced.

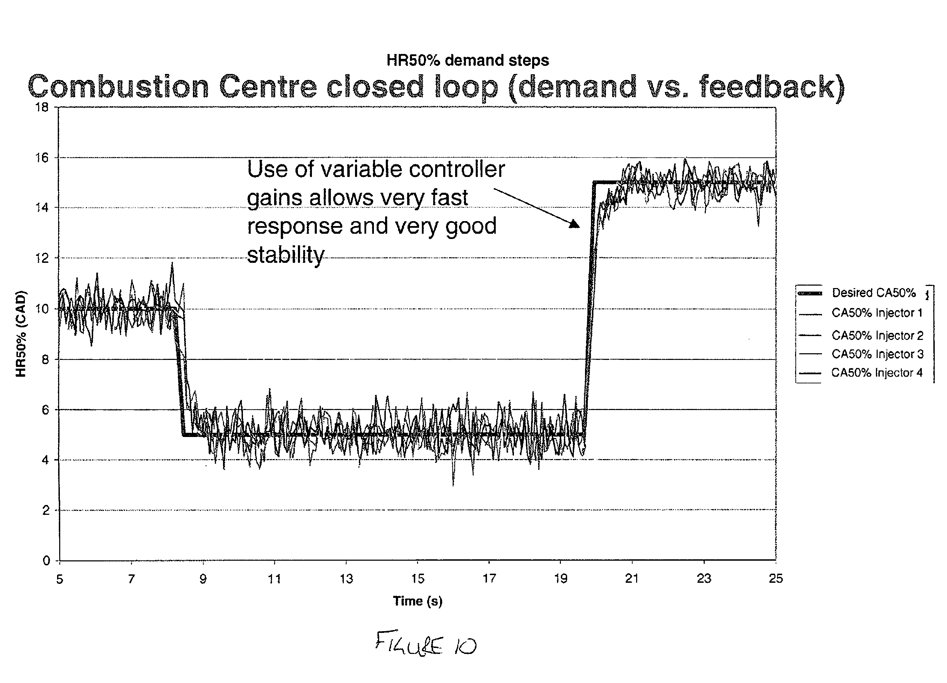

Figure 10 shows how an engine system operating in accordance with an embodiment of the present invention responds quickly to changes in desired engine control parameters. In the figure it can be seen that the desired CA50% value shows two step changes (the first at approximately 9 seconds and the second at approximately 20 seconds). It can be seen that the actual CA50% for each of the four cylinders follows the desired value very closely and that there is virtually no lag between the desired and actual values.

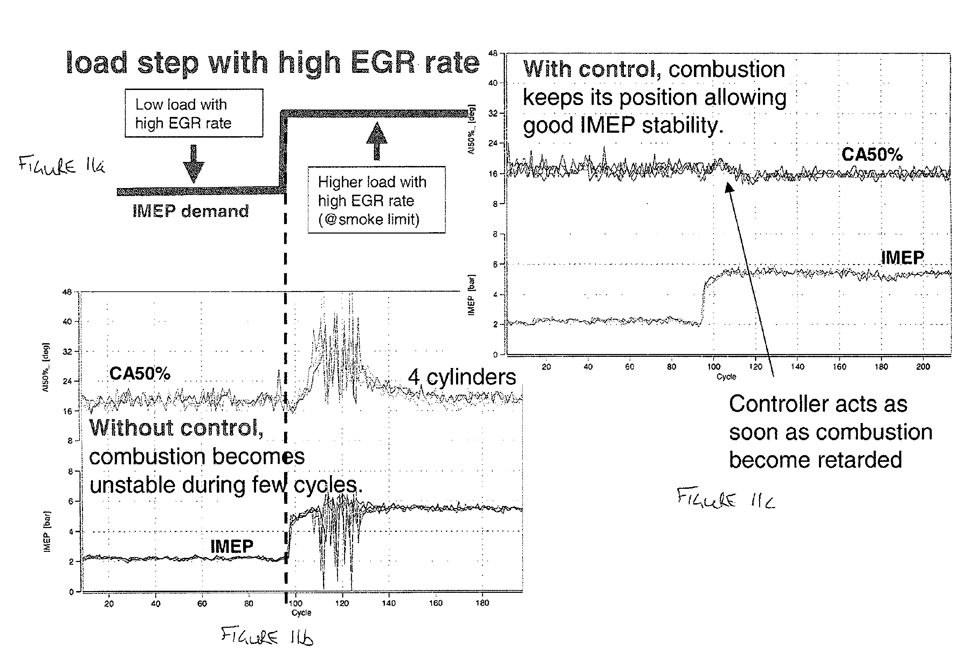

Figures 11 a to 11 c show the results of a vehicle test with a fast exhaust gas recirculation (EGR) amount change. Figure 11a shows the change in IMEP demand as a step change. Figure 11b, which represents a vehicle that is not operating the control method of the present invention, shows the IMEP and CA50% values for each of the four cylinders within the engine system either side of this step change. It can be seen within a few engine cycles combustion has become unstable.

By contrast, in Figure 11c, which represents a vehicle that is operating the control method of the present invention, it can be seen that the CA50% has kept its position and IMEP values are stable.

The present invention may be implemented in a common rail injector, in which a common supply (rail) delivers fuel to at least one injector of the engine, or may be implemented in an electronic unit injector (EUI) in which each injector of the engine is provided with its own dedicated pump and, hence, high pressure fuel supply. The invention may also be implemented in a hybrid scheme, having dual common rail/EUI functionality.

In an engine system comprising a single injector the present invention may be used to determine the global fuel value to be applied to the engine. In engines comprising more than one injector then the global fuel calculation aspect of the invention may also be combined with the concept of cylinder balancing.

It will be understood that the embodiments described above are given by way of example only and are not intended to limit the invention, the scope of which is defined in the appended claims. It will also be understood that the embodiments described may be used individually or in combination.

**Claims**

1. A method of controlling an engine system, the method comprising:

    receiving data relating to engine operation;
    calculating in an engine model a combustion parameter and an injection parameter required to operate the engine system in accordance with the received engine data;
    controlling the engine system based on the calculated injection parameter; and
    adjusting the engine model over time based on a comparison between the calculated engine combustion parameter and a corresponding measured engine combustion parameter, wherein
    the engine model comprises a fuel efficiency model which is used to calculate a global fuel value for the engine system and a main timing model which is used to calculate a timing value which can be used to determine absolute injection timings for the injectors.

2. A method as claimed in Claim 1, wherein the received data relating to engine operation comprises a driver demand parameter.

3. A method as claimed in Claim 1 or 2, wherein the received data relating to engine operation comprises data relating to the engine state and the calculation step comprises a pre-calculation step in which the calculated combustion control parameter is calculated from the engine state data.

4. A method as claimed in any preceding claim, wherein the method comprises measuring in-cylinder pressure and calculating the measured engine combustion parameter from the in-cylinder pressure.

5. A method as claimed in Claim 4, wherein the in-cylinder pressure is measured for at least one cylinder within the engine system.

6. A method as claimed in any preceding claim, wherein the engine model is adjusted every engine cycle.

7. A method as claimed in any of claims 1 to 6 wherein the engine model is adjusted periodically.

8. A method as claimed in any preceding claim, wherein the model comprises one or more model coefficients and the adjusting step comprises calculating updated coefficients based on the comparison of the calculated and measured combustion parameters and storing the updated coefficients in the engine model.

9. A method as claimed in any preceding claim wherein the calculated engine combustion parameter comprises the centre of combustion and the injection parameter comprises injection timing.

10. A method as claimed in any preceding claim wherein the calculated engine combustion parameter comprises engine torque and the injection parameter comprises fuel demand.

11. A method as claimed in any preceding claim wherein the calculating step comprises calculating a global fuel value for the engine system.

12. A method as claimed in Claim 11 further comprising balancing the fuel value across each cylinder within the engine system such that individual fuel value corrections sum to zero.

13. A controller arranged to control an engine system comprising:

    inputs arranged to receive data relating to engine operation;
    processing means arranged to calculate in an engine model a combustion parameter and an injection parameter required to operate the engine system in accordance with the received engine data;
outputs arranged to output control signals for controlling the engine system based on the calculated injection parameter; and
adjustment means arranged to adjust the engine model over time based on a comparison between the calculated engine combustion parameter and a corresponding measured engine combustion parameter, wherein
the engine model comprises a fuel efficiency model which is used to calculate a global fuel value for the engine system and a main timing model which is used to calculate a timing value which can be used to determine absolute injection timings for the injectors.

14. A computer readable medium comprising a computer program arranged to configure a computer or an electronic control unit to implement the method according to Claim 1.

**Patentansprüche**

1. Verfahren zum Steuern eines Motorsystems, wobei das Verfahren Folgendes umfasst:

Empfangen von Daten, die sich auf den Motorbetrieb beziehen,
Berechnen, in einem Motormodell, eines Verbrennungsparameters und eines Einspritzungsparameters, die zum Betreiben des Motorsystems gemäß den empfangenen Motordaten erforderlich sind,
Steuern des Motorsystems auf Basis des berechneten Einspritzungsparameters und
Abstimmen des Motormodells mit der Zeit auf der Basis eines Vergleichs zwischen dem berechneten Motorverbrennungsparameter und einem entsprechenden gemessenen Motorverbrennungsparameter, wobei
das Motormodell ein Kraftstoffeffizienzmodell, das zum Berechnen eines globalen Brennstoffwerts für das Motorsystem verwendet wird, und ein Hauptzeitsteuerungsmodell, das zum Berechnen eines Zeitsteuerungswertes verwendet wird, der zum Ermitteln aboluter Einspritzzeitpunkte für die Einspritzventile verwendet werden kann, umfasst.

2. Verfahren nach Anspruch 1, wobei die empfangenen Daten, die sich auf den Motorbetrieb beziehen, einen Fahrerwunschparameter umfassen.

3. Verfahren nach Anspruch 1 oder 2, wobei die empfangenen Daten, die sich auf den Motorbetrieb beziehen, Daten umfassen, die sich auf den Motorzustand beziehen, und der Berechnungsschritt einen Vorberechnungsschritt umfasst, in dem der berechnete Verbrennungssteuerungsparameter anhand der Motorzustandsdaten berechnet wird.

4. Verfahren nach einem der vorhergehenden Ansprüche, bei dem das Verfahren das Messen des Zylinderinnendrucks und das Berechnen des gemessenen Motorverbrennungsparameters anhand des Zylinderinnendrucks umfasst.

5. Verfahren nach Anspruch 4, wobei der Zylinderinnendruck für wenigstens einen Zylinder in dem System gemessen wird.

6. Verfahren nach einem der vorhergehenden Ansprüche, wobei das Motormodell in jedem Motorzyklus abgestimmt wird.

7. Verfahren nach einem der Ansprüche 1 bis 6, wobei das Motormodell periodisch abgestimmt wird.

8. Verfahren nach einem der vorhergehenden Ansprüche, wobei das Modell einen oder mehrere Modellkoeffizienten aufweist und der Abstimmungsschritt das Berechnen aktualisierter Koeffizienten auf Basis des Vergleichs der berechneten und gemessenen Verbrennungsparameter und das Speichern der aktualisierten Koeffizienten in dem Motormodell umfasst.

9. Verfahren nach einem der vorhergehenden Ansprüche, wobei der berechnete Motorverbrennungsparameter das Verbrennungszentrum umfasst und der Einspritzparameter den Einspritzzeitpunkt umfasst.

10. Verfahren nach einem der vorhergehenden Ansprüche, wobei der berechnete Motorverbrennungsparameter das Motordrehmoment umfasst und der Einspritzparameter den Kraftstoffbedarf umfasst.

11. Verfahren nach einem der vorhergehenden Ansprüche, wobei der Berechnungsschritt das Berechnen eines globalen Kraftstoffwertes für das Motorsystem umfasst.

12. Verfahren nach Anspruch 11, das ferner das Abgleichen des Kraftstoffwertes über alle Zylinder in dem Motorsystem umfasst, so dass sich einzelne Kraftstoffwertkorrekturen zu null summieren.

13. Controller zum Steuern eines Motorsystems, der Folgendes umfasst:

Eingänge, die zum Empfangen von Daten angeordnet sind, die sich auf den Motorbetrieb beziehen,
eine Verarbeitungseinrichtung, die zum Berechnen, in einem Motormodell, eines Verbrennungsparameters und eines Einspritzungsparameters, die zum Betreiben des Motorsystems gemäß den empfangenen Motordaten erforderlich sind, angeordnet ist,
Ausgänge, die zum Ausgeben von Steuersignalen zum Steuern des Motorsystems auf Basis des berechneten Einspritzungsparameters angeordnet sind, und
eine Abstimmungseinrichtung, die zum Abstimmen des Motormodells mit der Zeit auf der Basis eines Vergleichs zwischen dem berechneten Motor-Verbrennungsparameter und einem entsprechenden gemessenen Motor-Verbrennungsparameter angeordnet ist, wobei
das Motormodell ein Kraftstoffeffizienzmodell, das zum Berechnen eines globalen Brennstoffwerts für das Motorsystem verwendet wird, und ein Hauptzeitsteuerungsmodell, das zum Berechnen eines Zeitsteuerungswertes verwendet wird, der zum Ermitteln absoluter Einspritzzeitpunkte für die Einspritzventile verwendet werden kann, umfasst.

14. Computerlesbares Medium, umfassend ein Computerprogramm, das zum Konfigurieren eines Computers oder eines elektronischen Steuergeräts zum Ausführen des Verfahrens nach Anspruch 1 angeordnet ist.

## Revendications

1. Procédé de commande d'un système moteur, le procédé comprenant les étapes consistant à :

recevoir des données en relation avec le fonctionnement du moteur ;
calculer dans un modèle du moteur un paramètre de combustion et un paramètre d'injection requis pour faire fonctionner le système moteur en accord avec les données reçues du moteur ;
commander le système moteur en se basant sur le paramètre d'injection calculé ; et
ajuster le modèle du moteur au cours du temps en se basant sur une comparaison entre le paramètre de combustion calculé pour le moteur et un paramètre de combustion correspondant mesuré pour le moteur, dans lequel
le modèle du moteur comprend un modèle d'efficacité de carburant qui est utilisé pour calculer une valeur de carburant globale pour le système moteur et un modèle de temporisation principal qui est utilisé pour calculer une valeur de temporisation qui peut être utilisée pour déterminer des temporisations d'injection absolues pour les injecteurs.

2. Procédé selon la revendication 1, dans lequel les données reçues en relation avec le fonctionnement du moteur comprennent un paramètre de demande de la part du conducteur.

3. Procédé selon la revendication 1 ou 2, dans lequel les données reçues en relation avec le fonctionnement du moteur comprennent des données en relation avec l'état du moteur et l'étape de calcul comprend une étape de pré-calcul dans laquelle le paramètre de commande de combustion calculé est calculé à partir des données d'état du moteur.

4. Procédé selon l'une quelconque des revendications précédentes, dans lequel le procédé comprend de mesurer la pression interne des cylindres et de calculer le paramètre de combustion mesuré du moteur à partir de la pression interne des cylindres.

5. Procédé selon la revendication 4, dans lequel la pression interne des cylindres est mesurée pour au moins un cylindre dans le système moteur.

6. Procédé selon l'une quelconque des revendications précédentes, dans lequel le modèle moteur est ajusté à chaque cycle du moteur.

**7.** Procédé selon l'une quelconque des revendications 1 à 6, dans lequel le modèle moteur est ajusté périodiquement.

**8.** Procédé selon l'une quelconque des revendications précédentes, dans lequel le modèle comprend un ou plusieurs coefficient(s) de modèle et l'étape d'ajustement comprend de calculer des coefficients mis à jour basé sur la comparaison des paramètres de combustion calculés et mesurés, et de stocker les coefficients mis à jour dans le modèle moteur.

**9.** Procédé selon l'une quelconque des revendications précédentes, dans lequel le paramètre de combustion calculé pour le moteur comprend le centre de combustion, et le paramètre d'injection comprend la temporisation d'injection.

**10.** Procédé selon l'une quelconque des revendications précédentes, dans lequel le paramètre de combustion calculé pour le moteur comprend le couple moteur, et le paramètre d'injection comprend la demande de carburant.

**11.** Procédé selon l'une quelconque des revendications précédentes, dans lequel l'étape de calcul comprend de calculer une valeur de carburant globale pour le système moteur.

**12.** Procédé selon la revendication 11, comprenant en outre l'équilibrage de la valeur de carburant à travers chaque cylindre dans le système moteur, de sorte que les corrections aux valeurs de carburant individuelles ont une somme égale à zéro.

**13.** Contrôleur agencé pour commander un système moteur, comprenant :

des entrées agencées pour recevoir des données en relation avec le fonctionnement du moteur ;
des moyens de traitement agencés pour calculer dans un modèle du moteur un paramètre de combustion et un paramètre d'injection requis pour faire fonctionner le système moteur en accord avec les données reçues du moteur ;
des sorties agencées pour sortir des signaux de commande afin de commander le système moteur en se basant sur le paramètre d'injection calculé ; et
des moyens d'ajustement agencés pour ajuster le modèle moteur au cours du temps en se basant sur une comparaison entre le paramètre de combustion calculé pour le moteur et un paramètre de combustion correspondant mesuré pour le moteur, dans lequel
le modèle du moteur comprend un modèle d'efficacité de carburant qui est utilisé pour calculer une valeur de carburant globale pour le système moteur, et un modèle de temporisation principal qui est utilisé pour calculer une valeur de temporisation qui peut être utilisée pour déterminer des temporisations d'injection absolues pour les injecteurs.

**14.** Support lisible à l'ordinateur comprenant un programme d'ordinateur agencé pour configurer un ordinateur ou une unité de commande électronique afin de mettre en oeuvre le procédé selon la revendication 1.

FIGURE 1

9

42a

**Desired Engine Control Parameter**

**Engine State & Combustion modes**

40

**Adaptive Model Based Injection Timings & Quantities Calculation**

62

**Model Based Adaptation**

Initial/corrected Injection Timing/Quantities

44

**Desired Combustion Control Parameter**

42b

60

56

**Combustion**

58

46

**Controller**

48

**Initial/Corrected Injection Timing & Quantities Demand**

50

**Unit Cylinder**

**Signal Processing & Combustion Calculation**

54

**Measured Pressure**

52

EP 2 184 472 B1

FIGURE 2

FIGURE 3

B

Engine State & Combustion modes
40

CA50% Demand Calculation
9a

Model Based Injection Timing Calculation
9b

42b — Desired CA50%

44 — Initial/Corrected Timing

Model Adaptation
62

58

54

52 — Measured Pressure

Heat Release Rate Calculation

CA50% Cylinder 1 → Filter
CA50% Cylinder 2 → Filter
CA50% Cylinder 3 → Filter
CA50% Cylinder 4 → Filter

Injection Timing Offset Controller

60

Timing Offset Inj 1
Timing Offset Inj 2
Timing Offset Inj 3
Timing Offset Inj 4

56

Absolute Injection Timing Calculation

46

Timing Demand Inj 1
Timing Demand Inj 2
Timing Demand Inj 3
Timing Demand Inj 4

48

Strategy supervisor: Strategy enabling /disabling
transient detection, integral term reset ...

FIGURE 4a

EP 2 184 472 B1

FIGURE 4b

Figure 5

Cylinder Pressure With Control

FIGURE 6b

Cylinder Cylinder Pressure Without Control

FIGURE 6a

FIGURE 7c

**Heat Release Rate with control**

Heat release Cyl1
Heat release Cyl2
Heat release Cyl3
Heat release Cyl4

FIGURE 7d

**Cumulative Heat Release Rate with Control**

Target Combustion Center Crank Angle Position CA50%

Cumulative HR cyl1
Cumulative HR cyl2
Cumulative HR cyl3
Cumulative HR cyl4

**Heat Release Rate without Control**

Heat release Cyl1
Heat release Cyl2
Heat release Cyl3
Heat release Cyl4

FIGURE 7a

**Cumulative Heat Release Rate without Control**

Cumulative HR cyl1
Cumulative HR cyl2
Cumulative HR cyl3
Cumulative HR cyl4

FIGURE 7b

**Transient Vehicle Tests with IMEP Cylinder Balancing**

IMEP control closed loop allows very low individual cylinder torque spread (fast and excellent cylinder balancing)

FIGURE 8

EP 2 184 472 B1

IMEP control @ 3500RPM; IMEP=9Bar

FIGURE 9

HR50% demand steps
## Combustion Centre closed loop (demand vs. feedback)

Use of variable controller gains allows very fast response and very good stability

Desired CA50%
CA50% Injector 1
CA50% Injector 2
CA50% Injector 3
CA50% Injector 4

HR50% (CAD)

Time (s)

FIGURE 10

EP 2 184 472 B1

EP 2 184 472 B1

# load step with high EGR rate

FIGURE 11a

Low load with
high EGR rate

IMEP demand

Higher load with
high EGR rate
(@smoke limit)

With control, combustion
keeps its position allowing
good IMEP stability.

CA50%

IMEP

CA50%

4 cylinders

Without control,
combustion becomes
unstable during few cycles.

IMEP

Controller acts as
soon as combustion
become retarded

FIGURE 11c

FIGURE 11b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003046989 A
- EP 1744037 A
- FR 2864840 A1
- WO 2004048761 A
- DE 102004008234
- EP 1731745 A
- EP 1548418 A
- EP 1496237 A
- EP 1512861 A
- EP 1559895 A
- EP 1731740 A
- EP 1936156 A
- EP 1936157 A
- EP 1429009 A